Europäisches Patentamt

European Patent Office

Office européen des brevets

(19)

(11) **EP 1 469 327 A1**

(12) **EUROPEAN PATENT APPLICATION**

(43) Date of publication:
**20.10.2004 Bulletin 2004/43**

(51) Int Cl.[7]: **G02B 5/28**, G02B 7/00,
G01B 9/02

(21) Application number: **04251620.3**

(22) Date of filing: **22.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **15.04.2003 JP 2003109904**

(71) Applicant: **ALPS ELECTRIC CO., LTD.
Ota-ku Tokyo 145 (JP)**

(72) Inventor: **Kitagawa, Hitoshi
Osuka-cho, Ota-ku, Tokyo 145 (JP)**

(74) Representative: **Kensett, John Hinton
Saunders & Dolleymore,
9 Rickmansworth Road
Watford, Hertfordshire WD18 0JU (GB)**

(54) **Multilayer optical filter with small temperature shift of central wavelength**

(57) A multilayer optical filter includes a substrate (1); a multilayer film (5) including a plurality of thin-films, alternately stacked on at least one face of the substrate, each containing corresponding dielectric materials having different refractive indexes; and one or more adjusting layers (2) for adjusting the temperature shift of the wavelength of transmitted light.

## FIG. 1

EP 1 469 327 A1

**Description**

BACKGROUND OF THE INVENTION

1. Field of the Invention

The present invention relates to multilayer optical filters, functioning as bandpass filters or gain-flattening filters, for transmitting or reflecting light having a predetermined wavelength and also relates to optical components including such multilayer optical filters. The present invention particularly relates to a multilayer optical filter having an extremely small temperature coefficient and an optical component including such a multilayer optical filter.

2. Description of the Related Art

Multilayer optical filters include stacked layers and have predetermined characteristics, based on the interference of light occurring at interfaces between the layers, for transmitting or reflecting light having a specific wavelength.

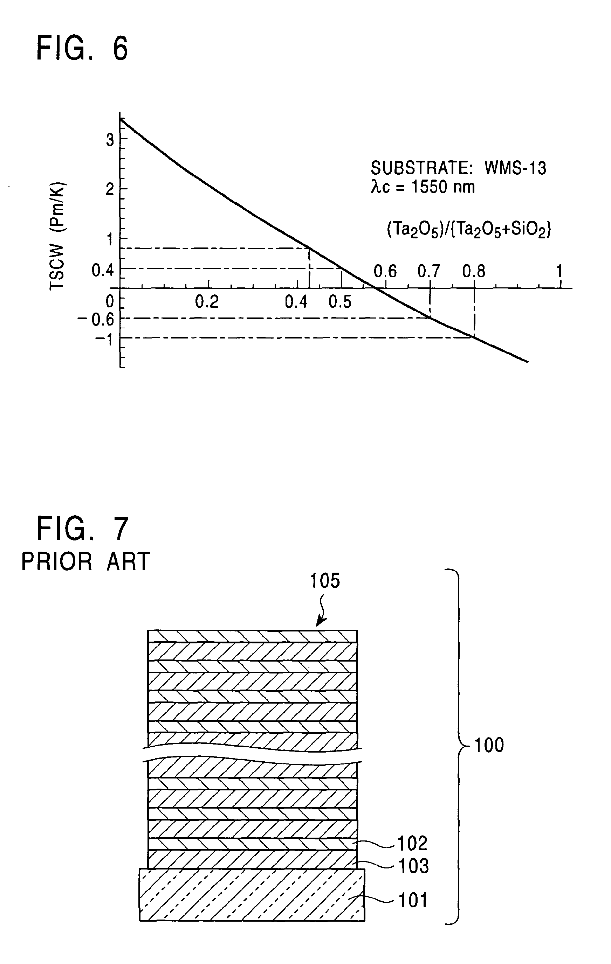

FIG. 7 shows an example of known multilayer optical filters. A multilayer optical filter 100 includes a glass substrate 101 and a multilayer film 105 disposed on the glass substrate 101. The multilayer film 105 includes high-refractive layers 102 containing tantalum oxide ($Ta_2O_5$) and low-refractive layers 103 containing silicon dioxide ($SiO_2$). The high-refractive layers 102 and low-refractive layers 103 are alternately stacked and the number of the stacked layers is several tens to about one hundred.

In the multilayer optical filter 100, the high-refractive layers 102 and the low-refractive layers 103 principally have an optical thickness of $\lambda/4$, that is, values of the optical thickness have a certain distribution and are concentrated close to $\lambda/4$, wherein $\lambda$ represents the wavelength of light to be transmitted or reflected. The optical thickness is defined as the product of the refractive index and the physical thickness (actual thickness). In order to transmit light with a wavelength of, for example, 1.55 μm for optical communication applications, the high-refractive layers 102 have an actual thickness of 0.05 to 0.8 μm and principally 0.18 μm, and the low-refractive layers 103 have an actual thickness of 0.09 to 0.8 μm and principally 0.26 μm.

In the multilayer optical filter 100, there is a problem in that the peak wavelength of a transmitted light wave is shifted due to a change in ambient temperature. Therefore, in order to solve the problem, the following technique is disclosed in Japanese Unexamined Patent Application Publication No. 7-198935 (hereinafter referred to as Patent Document 1): a material contained in a substrate and the type of a multilayer film are selected depending on the coefficient of linear expansion of the substrate, whereby the temperature coefficient of a shift in wavelength is adjusted based on a relationship that the temperature coefficient is in reverse proportion to the coefficient of linear expansion of the substrate.

According to the technique disclosed in Patent Document 1, the coefficient of linear expansion and refractive index of the substrate slightly vary depending on the type of glass of which the substrate is made. Therefore, the following technique is also disclosed in the Patent Document 1: the temperature coefficient of a shift in wavelength is adjusted by using the above variation and by testing multilayer films including $Ta_2O_5$ and $SiO_2$ layers; $TiO_2$ and $SiO_2$ layers; $Ta_2O_5$, $SiO_2$, and $Al_2O_3$ layers; or $TiO_2$, $SiO_2$, and $Al_2O_3$, layers. However, no optical filters having a small temperature coefficient that can be assumed to be zero are disclosed in Patent Document 1. That is, there is a problem in that optical filters having a small temperature coefficient that can be assumed to be zero cannot be achieved by a current technique even if any type of substrate is used.

The following procedure is disclosed in Patent Document 1: a substrate having a coefficient of linear expansion of $75 \times 10^{-7}$ to $150 \times 10^{-7}$ is selected based on relationships, represented by lines *a* to *d* shown in figure 1 of the Patent Document 1, between the temperature coefficient and the wavelength shift; and $TiO_2$, $SiO_2$, and $Al_2O_3$ layers or $TiO_2$ and $SiO_2$ layers are placed on the substrate, thereby preparing a multilayer optical filter including a multilayer film including the $TiO_2$, $SiO_2$, and $Al_2O_3$ layers or the $TiO_2$ and $SiO_2$ layers. However, the multilayer optical filter does not have a small temperature coefficient that can be assumed to be zero when the substrate is commercially available. This is because the coefficient of linear expansion of the substrate is a value inherent to a material contained in the substrate and cannot be therefore controlled. Thus, there is a problem in that the temperature coefficient of an actual filter cannot be adjusted to a small value that can be assumed to be zero even if the substrate contains any one of known materials.

SUMMARY OF THE INVENTION

The present invention has been made to solve the above problem. It is an object of the present invention to provide a multilayer optical filter having a small temperature coefficient that can be assumed to be zero and an optical component including the filter.

In order to achieve the above object, the present invention provides a multilayer optical filter including a substrate; a multilayer film including a plurality of thin-films, alternately stacked on at least one face of the substrate, each containing corresponding dielectric materials having different refractive indexes; and one or more adjusting layers for adjusting the temperature shift of the wavelength of transmitted light.

The temperature shift of the wavelength of light transmitted through the multilayer film can be adjusted using the one or more adjusting layers. That is, the temperature shift of the wavelength of light transmitted through the multilayer film can be adjusted by selecting a material of the one or more adjusting layers from various compounds and also adjusting the thickness of the one or more adjusting layers. Therefore, the multilayer optical filter has a small temperature coefficient that can be assumed to be zero. Thus, in the multilayer optical filter, a change in ambient temperature hardly causes a shift in the peak wavelength of transmitted light.

In the multilayer optical filter, the adjusting layer may be directly placed on the substrate and the multilayer film may be placed on the adjusting layer.

According to the above configuration, an influence exerted on the multilayer film by the adjusting layer can be controlled and a change in the temperature coefficient of the multilayer film can therefore be adjusted.

In the multilayer optical filter, a plurality of the adjusting layers may be placed in the multilayer film.

According to the above configuration, an influence exerted on the multilayer film by the adjusting layers can be controlled and a change in the temperature coefficient of the multilayer film can therefore be adjusted.

In the multilayer optical filter, the one or more adjusting layers preferably have a thickness of 5 to 50 $\mu$m.

A change in the temperature coefficient of the multilayer film can be reduced by decreasing the thickness of the one or more adjusting layers, and the change can be increased by increasing the thickness thereof. That is, a change in the temperature coefficient of the multilayer film can be precisely adjusted by controlling the thickness of the one or more adjusting layers. When the thickness is 5 $\mu$m or less, the one or more adjusting layers have an ability insufficient to reduce a change in the temperature coefficient and are not therefore in practical use. When the thickness is more than 50 $\mu$m, the ability to reduce a change in the temperature coefficient is saturated and an increase in the thickness causes an increase in cost, an increase in the time taken to form the one or more adjusting layers, and a decrease in efficiency.

In the multilayer optical filter, a plurality of the thin-films included in the multilayer film may contain two or more materials selected from the group consisting of $TiO_2$, $SiO_2$, $Ta_2O_5$, $Al_2O_3$, $ZrO_2$, Si, ZnS, HfO, Ge, $Nd_2O_6$, $Nb_2O_5$, and $CeO_2$.

An optical component of the present invention includes the multilayer optical filter.

According to the above configuration, a change in the temperature coefficient of the optical component is sufficiently small to be assumed to be zero. Thus, in the optical component, a change in ambient temperature hardly causes a shift in the peak wavelength of transmitted light; hence, the optical component has superior optical properties.

Embodiments of the present invention will now be described, by way of example, with reference to the accompanying diagrammatic drawings, in which:

FIG. 1 is a sectional view showing a multilayer optical filter according to a first embodiment of the present invention;

FIG. 2A is a sectional view showing a configuration in which an adjusting layer for adjusting the coefficient of linear expansion is placed on a substrate, and FIG. 2B is a sectional view showing a configuration in which the adjusting layer, one of high refractive layers, and one of low refractive layers are placed in that order;

FIG. 3 is a sectional view showing a multilayer optical filter according to a third embodiment of the present invention;

FIG. 4 is a sectional view showing a multilayer optical filter according to a fourth embodiment of the present invention;

FIG. 5 is a sectional view showing an example of an optical filter module including a multilayer optical filter of the present invention;

FIG. 6 is a graph showing the relationship between the temperature shift of a central wavelength of a multilayer optical filter and the ratio of the volume of $Ta_2O_5$ thin-films to the total volume of the $Ta_2O_5$ thin-films and $SiO_2$ thin-films; and

FIG. 7 is a sectional view showing an example of a known multilayer optical filter.

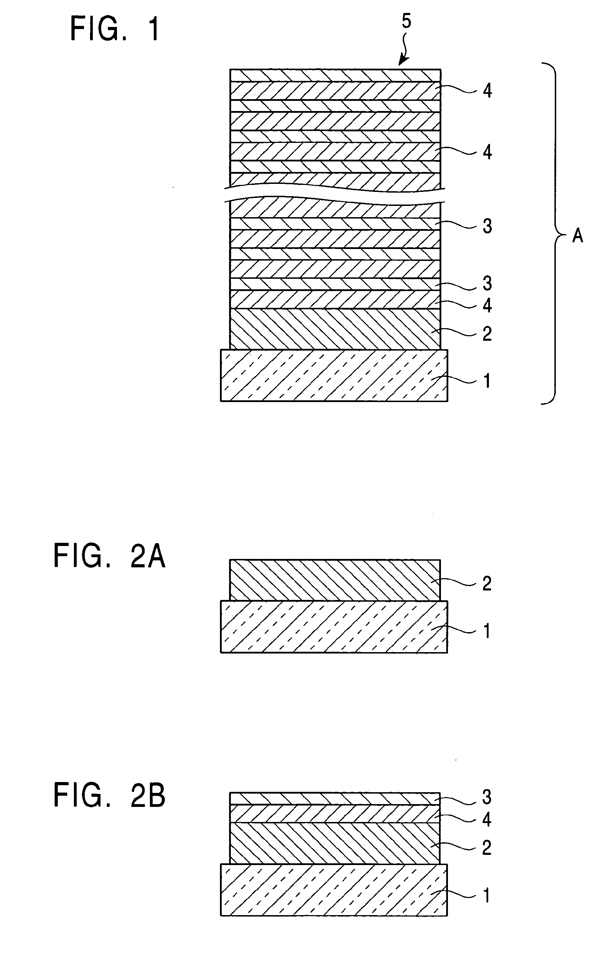

FIG. 1 is a sectional view showing a multilayer optical filter according to a first embodiment of the present invention. In the following drawings, in order to provide a clear understanding of the drawings, different scales are used for showing layers and members. The present invention is not limited to the embodiments below.

With respect to FIG. 1, the multilayer optical filter A includes a substrate 1 made of glass or the like, an adjusting layer 2 for adjusting the temperature coefficient or the coefficient of linear expansion, and a multilayer film 5, the adjusting layer 2 and the multilayer film 5 being disposed on the upper face of the substrate 1 in that order. The multilayer film 5 includes a plurality of pairs of low-refractive layers 3 and high-refractive layers 4 having a refractive index different from that of the low-refractive layers 3. The number of the low-refractive layers 3 and high-refractive layers 4 alternately stacked is several tens to about one hundred in total. The multilayer optical filter A functions as a bandpass filter or a gain-flattening filter, transmitting light with a wavelength of 1.55 μm, for optical communication.

Examples of the glass of which the substrate 1 is made include quartz glass; glass BK7 having a refractive index of 1.5; glass WMS13, manufactured by Hoya Glass Works Ltd., having a refractive index of 1.52; and glass WMS15, manufactured by Hoya Glass Works Ltd., having a refractive index of 1.52. The substrate 1 preferably has a thickness of several mm, for example, 6 mm, so as to have a strength sufficient to support itself.

The adjusting layer 2 is a thin film containing the same compound as that contained in the low-refractive layers 3 or high-refractive layers 4 included in the multilayer film 5 described below or another thin film containing a compound described below. The adjusting layer 2 is used for adjusting the temperature shift of the wavelength of light transmitted through the multilayer film 5. Furthermore, the adjusting layer 2 is used for adjusting the coefficient of linear expansion of the entire multilayer film 5, whereby the temperature shift of the wavelength of light transmitted through the multilayer film 5 is adjusted.

The adjusting layer 2 may contain a dielectric compound that is the same as a compound contained in the multilayer film 5. Examples of such a compound include $TiO_2$, $SiO_2$, $Ta_2O_5$, $Al_2O_3$, $ZrO_2$, Si, ZnS, HfO, Ge, $Nd_2O_6$, $Nb_2O_5$, and $CeO_2$.

The adjusting layer 2 may contain another compound such as $LiNbO_3$ or $PbMoO_4$ that is different from the compound contained in the multilayer film 5.

The adjusting layer 2 preferably has a thickness of 5 to 50 μm and more preferably 10 to 50 μm. A decrease in the thickness of the adjusting layer 2 increases a change in the temperature coefficient of the multilayer film 5 and an increase in the thickness of the adjusting layer 2 reduces a change in the temperature coefficient of the multilayer film 5. That is, a change in the temperature coefficient of the multilayer film 5 can be precisely adjusted by controlling the thickness of the adjusting layer 2. When the adjusting layer 2 has a thickness of less than 5 μm, the ability of the adjusting layer 2 to reduce a change in the temperature coefficient is insufficient for practical use. When the adjusting layer 2 has a thickness of more than 50 μm, the ability of the adjusting layer 2 is saturated and an increase in the thickness causes an increase in the time taken to form the adjusting layer 2 having an excessive thickness.

Examples of a compound contained in the low-refractive layers 3 or high-refractive layers 4 include $TiO_2$ having a refractive index of 2.25, $SiO_2$ having a refractive index of 1.46, $Ta_2O_5$ having a refractive index of 2.05, $Al_2O_3$ having a refractive index of 1.65, $ZrO_2$ having a refractive index of 2.03, Si having a refractive index of 3.5, ZnS having a refractive index of 2.25, $HfO_2$ having a refractive index of 1.95, Ge having a refractive index of 4.85, $Nd_2O_6$, $Nb_2O_5$, CeO2, and CeF3 having a refractive index of 1.63. A combination of two or more of those compounds having different refractive indexes is used to prepare the multilayer film 5.

The low-refractive layers 3 and high-refractive layers 4 principally have an optical thickness of λ/4, that is, values of the optical thickness have a certain distribution and are concentrated close to λ/4, wherein λ represents the wavelength of light to be transmitted or reflected. The optical thickness is defined as the product of the refractive index and the physical thickness (actual thickness).

In order to transmit light with a wavelength of, for example, 1.55 μm for optical communication applications, the high-refractive layers 4 have an actual thickness of 0.05 to 0.8 μm and principally 0.18 μm when the high-refractive layers 4 contain $Ta_2O_5$ and the low-refractive layers 3 have an actual thickness of 0.09 to 0.8 μm and principally 0.26 μm when the low-refractive layers 3 contain $SiO_2$.

Examples of a combination of the low-refractive layers 3 and high-refractive layers 4 placed in the multilayer film 5 include a combination of $TiO_2$ thin-films and $SiO_2$ thin-films and a combination of $Ta_2O_5$ thin-films and $SiO_2$ thin-films, those thin-films being alternately stacked. When the multilayer film 5 further includes additional layers, examples of a combination of the additional layers, low-refractive layers 3, and high-refractive layers 4 include a combination of $TiO_2$ thin-films, $SiO_2$ thin-films, and $Al_2O_3$ thin-films, those thin-films being alternately stacked.

The adjusting layer 2, low-refractive layers 3, and high-refractive layers 4 can be formed by a film-forming process such as an ion beam sputtering process.

An example of a procedure for preparing those layers is described below using a multilayer structure including, for example, pairs of such $Ta_2O_5$ and $SiO_2$ thin-films. A tantalum (Ta) target and a silicon (Si) target are placed in a vacuum chamber disposed in a deposition system, the vacuum chamber is fed with a small amount of an oxygen gas functioning as a reaction gas, and a large number of the $Ta_2O_5$ and $SiO_2$ thin-films are formed on a base plate in turn by a deposition process.

The deposition system includes a device for measuring the thickness of the thin films to monitor the thin-film thickness during the formation of the thin films. For example, each $Ta_2O_5$ thin-film is formed using the Ta target, which is switched to the Si target when the $Ta_2O_5$ thin-film grows to have a predetermined thickness, and each $SiO_2$ thin film is then formed using the Si target, which is switched to the Ta target when the $SiO_2$ thin-film grows to have a predetermined thickness. This procedure is repeated, whereby the $Ta_2O_5$ and $SiO_2$ thin-films having a desired thickness are alternately stacked.

FIG. 2A is a sectional view showing a first step of forming the adjusting layer 2 on the substrate 1 by the above procedure. FIG. 2B is a sectional view showing a second step of forming one of the high-refractive layers 4 and one of the low-refractive layers 3 are formed on the adjusting layer 2 in that order, the refractive index of the high-refractive layers 4 being different from that of the low-refractive layers 3. Each high-refractive layer 4 and low-refractive layer 3 are alternately stacked repeatedly until the number of the high-refractive layers 4 and low-refractive layers 3 reaches a desired value, whereby the multilayer optical filter A having the configuration shown in FIG. 1 is prepared.

Standards for selecting the thickness of the adjusting layer 2 and a material thereof will now be described.

In the multilayer optical filter A having the above configuration, the following equation (1) is given when the substrate temperature and ambient temperature are 25°C:

$$TSCW = \lambda c[\{\beta f + \sigma / \{1 + \{(1 - P_o) / (N_o P_o)\}\} - \{2(\beta s - \beta_f) / (1 - s)\}\{s + (1 - 2s)(1 - 1 / N_o) / \{1 + (1 - P_o) / (N_o P_o)\}\}] \qquad (1)$$

wherein TSCW represents the temperature shift of a central wavelength, $\lambda c$ represents the wavelength of light used, $\beta_f$ represents the coefficient of linear expansion of the multilayer optical filter A, $\sigma$ represents the temperature coefficient of the refractive index, s represents the average Poisson ratio, $P_o$ represents the filling factor (average density), $N_o$ represents the transmissivity of the multilayer film 5 at 25°C, $\beta s$ represents the coefficient of linear expansion of the substrate 1, and $\beta f$ represents the coefficient of linear expansion of the multilayer film 5.

In equation (1), the wavelength $\lambda c$ is constant with respect to light used, the linear expansion coefficient $\beta_f$ of the multilayer optical filter A and the Poisson ratio s are determined depending on the type of the multilayer film 5, the filling factor $P_o$ is determined depending on materials and conditions for forming the multilayer film 5, the transmissivity $N_o$ and the linear expansion coefficient $\beta s$ are determined depending on the type of the multilayer film 5 and a material of the substrate 1, and only the linear expansion coefficient $\beta_f$ of the multilayer film 5 is a variable. Therefore, the temperature shift of a central wavelength can be adjusted by controlling the linear expansion coefficient $\beta_f$. Thus, in the present invention, in order to control the linear expansion coefficient $\beta_f$, the adjusting layer 2 is employed.

In the above embodiment, the single adjusting layer 2 is directly placed on the substrate 1. In another embodiment, one or more adjusting layers 2 may be placed in the multilayer film 5 or placed between each high-refractive layer 4 and low-refractive layer 3, or one of the adjusting layers 2 may be placed at the top of the multilayer film 5.

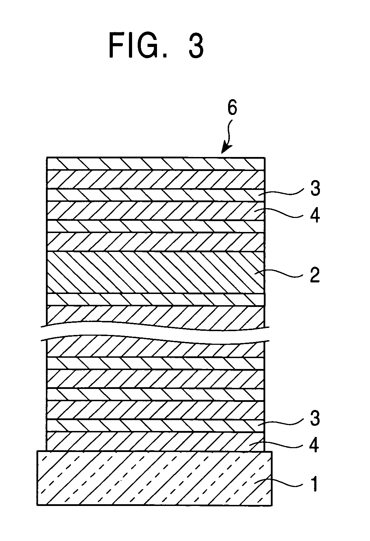

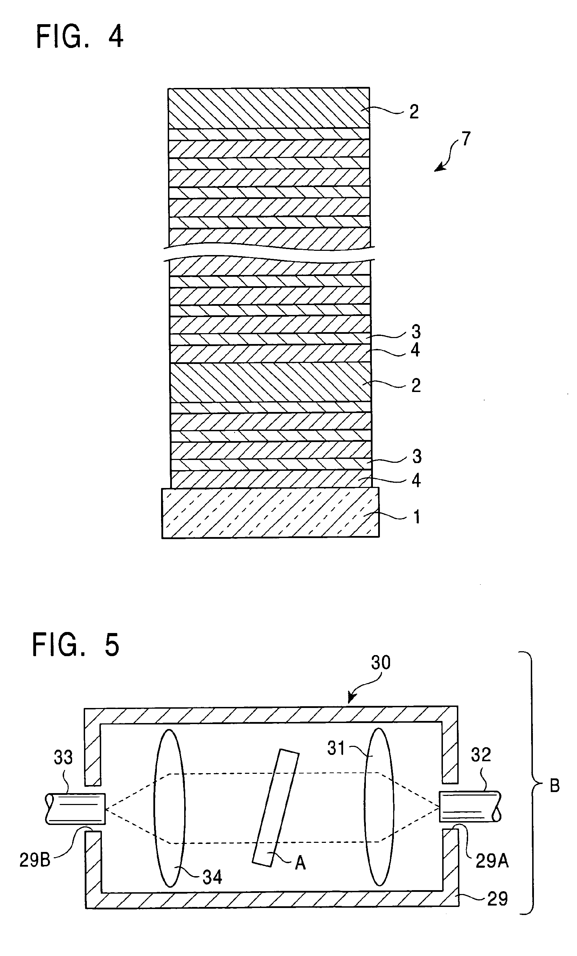

FIG. 3 shows a configuration of the multilayer optical filter A in which the single adjusting layer 2 is placed in the middle of the multilayer film 5. FIG. 4 shows another configuration of the multilayer optical filter A in which one of the adjusting layers 2 is placed in the middle of the multilayer film 5 and one of the adjusting layers 2 is placed at the top of the multilayer film 5.

If the single adjusting layer 2 or adjusting layers 2 are placed on or above the substrate 1 as shown in FIG. 3 or 4, the linear expansion coefficient of the multilayer film 5 can be adjusted, whereby a change in the temperature coefficient of the multilayer film 5 can be adjusted.

FIG. 5 shows a sectional view of an optical filter module B, which is an example of an optical component. The optical filter module B includes a casing 29, a first lens member 31, a second lens member 34, and a multilayer optical filter of the present invention, the first and second lens members 31 and 34 and the multilayer optical filter A being placed in the casing 29. The multilayer optical filter A has a configuration of any one of the above embodiments. The casing 29 has a first opening 29A positioned on the right and a second opening 29B positioned on the left. An end of a first optical fiber 32 is placed in the first opening 29A and an end of a second optical fiber 33 is placed in the second opening 29B. The following components and portions are arranged in this order from the left: the end of a second optical fiber 33, the second lens member 34, the multilayer optical filter A, the first lens member 31, and the end of a first optical fiber 32.

In the configuration shown in FIG. 5, since the optical filter module B includes the multilayer optical filter A, a change in ambient temperature hardly causes a shift in the peak wavelength of transmitted light. Thus, the optical filter module B has superior optical properties.

FIG. 6 shows the relationship between the temperature shift of a central wavelength (TSCW) of the multilayer optical filter A and the ratio of the volume of the $Ta_2O_5$ thin-films to the total volume of the $Ta_2O_5$ thin-films and $SiO_2$ thin-films, the relationship being based on equation (1) and being obtained when the wavelength $\lambda c$ of transmitted light is 1,550 nm and glass substrate WMS13 manufactured by Hoya Glass Works Ltd. is used.

With reference to FIG. 6, when the percentage of the volume of the $Ta_2O_5$ thin-films to the total volume of the $Ta_2O_5$ thin-films and $SiO_2$ thin-films is about 70%, the TSCW of the multilayer optical filter A is about -0.6 pm/k.

Examples

Example 1

A first multilayer structure was prepared according to the following procedure: a glass substrate (WMS13, manufactured by Hoya Glass Works Ltd.) having a thickness of 6 mm was placed in a vacuum chamber disposed in an ion beam-sputtering system, a Ta target and a Si target were also placed in the vacuum chamber, the pressure in the vacuum chamber was maintained at $6.7 \times 10^{-6}$ Pa, the partial pressure of an oxygen gas in the vacuum chamber was maintained at $2.4 \times 10^{-6}$ Pa, and $Ta_2O_5$ layers and $SiO_2$ layers were then formed on the glass substrate in turn by an ion beam-sputtering process.

The total number of the $Ta_2O_5$ layers and $SiO_2$ layers placed on the glass substrate was 33, the total thickness of the $Ta_2O_5$ layers and $SiO_2$ layers was 31.9 μm, and the percentage of the volume of the $Ta_2O_5$ layers to the total volume of the $Ta_2O_5$ layers and $SiO_2$ layers was 43.8%. The TSCW obtained by measuring the first multilayer structure was 0.8 pm/k. On the other hand, the TSCW obtained using the relationship shown in FIG. 6 is 0.7 pm/k.

A second multilayer structure having 36 layers and the following configuration was prepared: three additional $Ta_2O_5$ layers having a thickness of 4.15 μm are each placed at an upper section, middle section, and lower section of the first multilayer structure having 33 layers, wherein the thickness of the additional $Ta_2O_5$ layers is given by dividing $\lambda/4$ by the refractive index of the additional $Ta_2O_5$ layers and then multiplying the obtained quotient by 22. The TSCW obtained by measuring the second multilayer structure was 0.4 pm/k, which is a small value that can be assumed to be zero.

On the other hand, since the percentage of the volume of the $Ta_2O_5$ layers to the total volume of the $Ta_2O_5$ layers and $SiO_2$ layers is 51%, the TSCW obtained using the relationship shown in FIG. 6 is 0.4 pm/k, which agrees with the TSCW obtained by measuring the second multilayer structure.

Example 2

$Ta_2O_5$ layers and $SiO_2$ layers were formed on a glass substrate that is the same as that described in Example 1 under the same conditions as those described in Example 1, whereby a third multilayer structure was prepared. The total number of the $Ta_2O_5$ layers and $SiO_2$ layers was 47, the total thickness of the $Ta_2O_5$ layers and $SiO_2$ layers was 54.9 μm, and the percentage of the volume of the $Ta_2O_5$ layers to the total volume of the $Ta_2O_5$ layers and $SiO_2$ layers was 75%. The TSCW obtained by measuring the first multilayer structure was -1.0 pm/k. On the other hand, the TSCW obtained using the relationship shown in FIG. 6 is -1.0 pm/k.

A fourth multilayer structure having 50 layers and the following configuration was prepared: three additional $SiO_2$ layers having a thickness of 4.2 μm are each placed at an upper section, middle section, and lower section of the third multilayer structure having 47 layers, the wherein the thickness of the additional $SiO_2$ layers is given by dividing $\lambda/4$ by the refractive index of the additional $SiO_2$ layers and then multiplying the obtained quotient by 16. The TSCW obtained by measuring the fourth multilayer structure was - 0.5 pm/k, which is a small value that can be assumed to be zero.

On the other hand, since the percentage of the volume of the $Ta_2O_5$ layers to the total volume of the $Ta_2O_5$ layers and $SiO_2$ layers is 68%, the TSCW obtained using the relationship shown in FIG. 6 is -0.5 pm/k, which agrees with the TSCW obtained by measuring the fourth multilayer structure.

## Claims

**1.** A multilayer optical filter comprising:

a substrate;
a multilayer film including a plurality of thin-films, alternately stacked on at least one face of the substrate, each containing corresponding dielectric materials having different refractive indexes; and
one or more adjusting layers for adjusting the temperature shift of the wavelength of transmitted light.

**2.** The multilayer optical filter according to Claim 1, wherein the adjusting layer is directly placed on the substrate and the multilayer film is placed on the adjusting layer.

**3.** The multilayer optical filter according to Claim 1, wherein the one or more adjusting layers contain the same material as that contained in at least one of high refractive thin-films and low refractive thin-films included in the multilayer film.

**4.** The multilayer optical filter according to Claim 1, wherein a plurality of the adjusting layers are placed in the multilayer film.

**5.** The multilayer optical filter according to Claim 1, wherein the one or more adjusting layers contain a material different from that contained in the multilayer film.

**6.** The multilayer optical filter according to Claim 1, wherein the one or more adjusting layers have a thickness of 5 to 50 μm.

**7.** The multilayer optical filter according to Claim 1, wherein a plurality of the thin-films included in the multilayer film contain two or more materials selected from the group consisting of $TiO_2$, $SiO_2$, $Ta_2O_5$, $Al_2O_3$, $ZrO_2$, Si, ZnS, HfO, Ge, $Nd_2O_6$, $Nb_2O_5$, and $CeO_2$.

**8.** An optical component comprising the multilayer optical filter according to Claim 1.

FIG. 1

FIG. 2A

FIG. 2B

# FIG. 3

FIG. 4

FIG. 5

## FIG. 6

SUBSTRATE: WMS-13
$\lambda c = 1550$ nm

$(Ta_2O_5)/\{Ta_2O_5+SiO_2\}$

## FIG. 7
## PRIOR ART

European Patent Office

**EUROPEAN SEARCH REPORT**

Application Number

EP 04 25 1620

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | EP 1 333 298 A (ALPS ELECTRIC CO LTD) 6 August 2003 (2003-08-06) * abstract * * paragraph [0042] - paragraph [0043] * * claims 1-4,11 * * figures 1,2 * | 1-3,6-8 | G02B5/28 G02B7/00 G01B9/02 |
| X | PATENT ABSTRACTS OF JAPAN vol. 010, no. 264 (P-495), 9 September 1986 (1986-09-09) & JP 61 088203 A (NEC CORP), 6 May 1986 (1986-05-06) * abstract * | 1,3,4 | |
| X | US 6 522 469 B1 (FUQUA PETER D ET AL) 18 February 2003 (2003-02-18) * abstract * * column 3, line 52 - line 54 * * column 4, line 3 - line 43 * * figures 1,2 * | 1,5 | |
| X | PATENT ABSTRACTS OF JAPAN vol. 2002, no. 05, 3 May 2002 (2002-05-03) -& JP 2002 022938 A (SUMITOMO OSAKA CEMENT CO LTD;OYOKODEN LAB CO LTD), 23 January 2002 (2002-01-23) * abstract * * paragraph [0030] - paragraph [0032] * * paragraph [0050] - paragraph [0051] * * figure 2 * | 1,3,6-8 | TECHNICAL FIELDS SEARCHED (Int.Cl.7) G02B G01B |
| X | US 2001/030810 A1 (GAEBE CARL) 18 October 2001 (2001-10-18) * paragraph [0020] - paragraph [0021] * * paragraph [0025] - paragraph [0028] * * figures 1,2,4 * | 1 | |

-/--

The present search report has been drawn up for all claims

| Place of search | Date of completion of the search | Examiner |
|---|---|---|
| MUNICH | 8 June 2004 | Schenke, C |

**European Patent Office**

## EUROPEAN SEARCH REPORT

Application Number

EP 04 25 1620

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 2002, no. 07, 3 July 2002 (2002-07-03) -& JP 2002 076513 A (FUJITSU LTD), 15 March 2002 (2002-03-15) * abstract * * figures 1-10 * | 1-8 | |
| A | US 6 465 105 B1 (HASHIMOTO KAZUAKI ET AL) 15 October 2002 (2002-10-15) * abstract * * example 25 * * figures 4,5 * | 1-8 | |

TECHNICAL FIELDS SEARCHED (Int.Cl.7)

The present search report has been drawn up for all claims

| Place of search | Date of completion of the search | Examiner |
|---|---|---|
| MUNICH | 8 June 2004 | Schenke, C |

EPO FORM 1503 03.82 (P04C01)

**ANNEX TO THE EUROPEAN SEARCH REPORT
ON EUROPEAN PATENT APPLICATION NO.**     EP 04 25 1620

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2004

| Patent document cited in search report | | | Publication date | Patent family member(s) | | | Publication date |
|---|---|---|---|---|---|---|---|
| EP 1333298 | A | | 06-08-2003 | JP | 2003215329 | A | 30-07-2003 |
| | | | | JP | 2003344649 | A | 03-12-2003 |
| | | | | EP | 1333298 | A2 | 06-08-2003 |
| | | | | US | 2003142407 | A1 | 31-07-2003 |
| JP 61088203 | A | | 06-05-1986 | NONE | | | |
| US 6522469 | B1 | | 18-02-2003 | NONE | | | |
| JP 2002022938 | A | | 23-01-2002 | NONE | | | |
| US 2001030810 | A1 | | 18-10-2001 | US | 6278549 | B1 | 21-08-2001 |
| | | | | WO | 0179898 | A2 | 25-10-2001 |
| JP 2002076513 | A | | 15-03-2002 | NONE | | | |
| US 6465105 | B1 | | 15-10-2002 | CA | 2314841 | A1 | 02-02-2001 |
| | | | | CN | 1285667 | A | 28-02-2001 |
| | | | | EP | 1074519 | A2 | 07-02-2001 |
| | | | | JP | 3383942 | B2 | 10-03-2003 |
| | | | | JP | 2001089184 | A | 03-04-2001 |
| | | | | JP | 2002321939 | A | 08-11-2002 |

EPO FORM P0459

For more details about this annex : see Official Journal of the European Patent Office, No. 12/82